# FASCICULE DE BREVET EUROPEEN

(11) **EP 4 450 397 B1**
(45) Date de publication et mention de la délivrance du brevet: **08.04.2026**
(21) Numéro de dépôt: 24170929.4
(22) Date de dépôt: 18.04.2024
(51) Int. Cl.: B64D 27/40, F16B 7/18, F16B 9/00, B64D 27/12

(54) **ENSEMBLE POUR LA FIXATION DE POUTRES COMPORTANT UNE PLAQUE SUPPORT ET DEUX FERRURES DE PART ET D'AUTRE DE LA PLAQUE SUPPORT**
ANORDNUNG ZUR BEFESTIGUNG VON BALKEN MIT EINER TRÄGERPLATTE UND ZWEI BESCHLAGTEILEN AN BEIDEN SEITEN DER TRÄGERPLATTE
BEAM FASTENING ARRANGEMENT COMPRISING A SUPPORT PLATE AND TWO FITTINGS ON BOTH SIDES OF THE SUPPORT PLATE

(30) Priorité: 21.04.2023 FR 2304043
(43) Date de publication de la demande: 23.10.2024
(73) Titulaire: AIRBUS OPERATIONS, 31060 Toulouse Cedex 9 (FR)
(72) Inventeur: VINCHES, Frédéric, 31060 TOULOUSE (FR); FUKASAKU, Kotaro, 31060 TOULOUSE (FR); AMARGIER, Rémi, 31060 TOULOUSE (FR)
(74) Mandataire: Cabinet Le Guen Maillet

(56) Documents cités:
- FR-A1- 2 993 535
- US-A1- 2016 280 381
- US-A1- 2019 352 905
- US-A1- 2023 003 243

## Description

### DOMAINE TECHNIQUE

La présente invention concerne un ensemble assurant la fixation de poutres sur une plaque support, où l'ensemble comporte la plaque support et deux ferrures fixées de part et d'autre de la plaque support, où chaque ferrure comporte au moins un manchon pour une poutre. La présente invention concerne également un châssis pour un ensemble propulsif d'un aéronef, ainsi qu'un aéronef comportant un ensemble propulsif présentant un tel châssis.

### ÉTAT DE LA TECHNIQUE ANTÉRIEURE

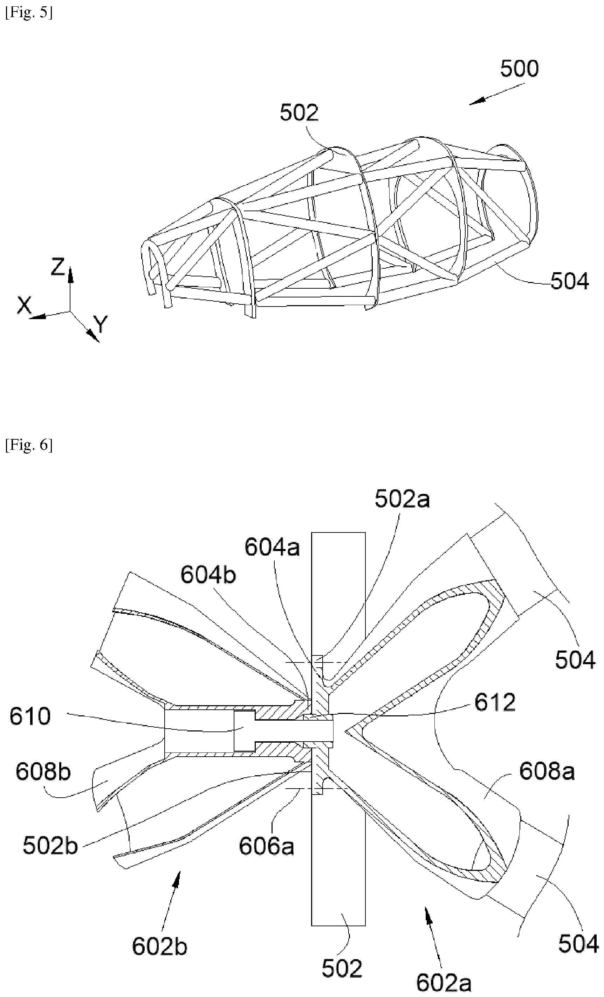

Un aéronef comporte classiquement au moins un ensemble propulsif comprenant un moteur solidaire d'un châssis, appelé plus communément mât, fixé à une structure d'une aile de l'aéronef. Un tel châssis prend par exemple la forme d'une cage dont un mode de réalisation est représenté à la Fig. 5. Le châssis 500 comporte une pluralité d'arches 502 ou nervures, ici cinq, disposées les unes à la suite des autres le long d'une direction longitudinale de l'aéronef et entre deux arches 502 successives, des poutres 504 ou longerons fixés par leurs extrémités aux deux arches 502 successives.

Les poutres 504 sont fixées à chaque arche 502 par des ferrures fixées à l'arche 502 et dont un mode de réalisation est représenté à la Fig. 6. La Fig. 6 montre une arche 502 et deux poutres 504 fixées de part et d'autre de l'arche 502 au niveau d'un même point de fixation par l'intermédiaire d'une première ferrure 602a et d'une deuxième ferrure 602b. L'arche 502 présente une première surface 502a inscrite dans un premier plan et une deuxième surface 502b inscrite dans un deuxième plan parallèle au premier plan.

La première ferrure 602a présente une première base 604a qui est fixée à l'arche 502 par une pluralité de moyens de fixation 606a comme des boulons. La première base 604a est en appui contre la première surface 502a de l'arche 502. À l'opposé de la première surface 502a, la première ferrure 602a présente deux manchons 608a solidaires de la première base 604a, où chacun reçoit par emmanchement une extrémité d'une poutre 504.

La deuxième ferrure 602b présente une deuxième base 604b qui est en appui contre la deuxième surface 502b de l'arche 502 qui est opposée à la première surface 502a. La deuxième ferrure 602b est fixée à la première ferrure 602a par une vis 610 avec une tête et une tige filetée, où la tige filetée traverse la deuxième ferrure 602b et l'arche 502, pour se visser dans un trou taraudé de la première ferrure 602a et où la tête vient en appui contre une partie de la deuxième ferrure 602b de manière à prendre en sandwich l'arche 502 entre la première ferrure 602a et la deuxième ferrure 602b. À l'opposé de la deuxième surface 502b, la deuxième ferrure 602b présente deux manchons 608b solidaires de la deuxième base 604b, où chacun reçoit par emmanchement une extrémité d'une poutre 504.

La première ferrure 602a comporte également un plot de centrage 612 qui s'emmanche dans un alésage de la deuxième ferrure 602b prévu à cet effet.

Même si un tel arrangement donne satisfaction, la conception est telle que la vis 610 doit être perpendiculaire à l'arche 502 et du fait de l'encombrement, les poutres 504 présentent toutes un angle avec l'arche 502 et il n'est pas possible d'avoir une poutre perpendiculaire à ladite arche 502.

Il est donc souhaitable de trouver un arrangement qui libère la position des poutres en autorisant par exemple un positionnement perpendiculaire de la poutre par rapport à l'arche.

Le document US-A-2023/003243 divulgue un ensemble pour la fixation de poutres de l'état de la technique.

### EXPOSÉ DE L'INVENTION

Un objet de la présente invention est de proposer un ensemble pour la fixation de poutres, où l'orientation des poutres présente une plus grande liberté.

À cet effet, est proposé un ensemble destiné à la fixation de poutres et comportant :
- une plaque support traversée par une ouverture et présentant une première face et une deuxième face opposée à la première face, les deux faces étant parallèles à un plan d'appui,
- une première ferrure présentant une première base fixée contre la première face par des moyens de fixation, du côté opposé à la première face, au moins un premier manchon destiné à recevoir par emmanchement une extrémité d'une poutre, et un plot présentant un alésage avec un axe,
- une deuxième ferrure présentant une deuxième base en appui contre la deuxième face, et, du côté opposé à la deuxième face, au moins un deuxième manchon solidaire de la deuxième base et destiné à recevoir par emmanchement une extrémité d'une poutre, et un logement qui présente une paroi de serrage percée d'un trou en regard de l'alésage, et
- une vis de serrage vissée dans l'alésage en prenant la paroi de serrage en sandwich,
ledit ensemble étant caractérisé en ce que le plot s'étend à travers ladite ouverture, en ce que ledit plot loge dans ledit logement et en ce que l'axe présente avec le plan d'appui, un angle compris entre 10° et 80°, et préférentiellement entre 30° et 60°.

Avec un tel arrangement, la vis de serrage est en position oblique par rapport au plan d'appui, ce qui autorise, entre autres, la mise en place de poutres perpendiculairement au plan d'appui.

Avantageusement, l'alésage est coaxial avec l'un des manchons de la première ferrure.

Avantageusement, la tête de la vis de serrage est logée dans un fût de la deuxième ferrure dont l'une des surfaces cylindriques porte un premier filet, et l'ensemble comporte une poutre additionnelle dont une extrémité porte un deuxième filet complémentaire au premier filet.

Avantageusement, le plot présente une surface extérieure qui s'emmanche dans une surface intérieure du logement, et la surface extérieure et la surface intérieure sont parallèles à l'axe de l'alésage.

Avantageusement, le plot présente une surface extérieure qui s'emmanche dans une surface intérieure du logement, et la surface extérieure et la surface intérieure sont perpendiculaires au plan d'appui.

L'invention propose également un châssis pour fixer un ensemble propulsif à une aile d'un aéronef, ledit châssis comportant une pluralité d'arches et une pluralité de poutres, où les poutres sont fixées aux arches à l'aide d'ensembles selon l'une des variantes précédentes, où chaque arche constitue une plaque support et où chaque manchon reçoit par emmanchement une extrémité d'une poutre.

L'invention propose également un aéronef comportant un châssis selon la variante précédente, un ensemble propulsif et une aile où l'ensemble propulsif est fixé au châssis et où le châssis est fixé à l'aile.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue de côté d'un aéronef comportant un ensemble propulsif selon l'invention,
Fig. 2 est une vue de côté d'un ensemble selon un premier mode de réalisation de l'invention,
Fig. 3 est une vue en coupe de l'ensemble de la Fig. 2,
Fig. 4 est une vue en coupe d'un ensemble selon un deuxième mode de réalisation de l'invention,
Fig. 5 est une vue en perspective d'un châssis pour un moteur d'aéronef, et
Fig. 6 est une vue de côté d'un ensemble de l'état de la technique.

### EXPOSÉ DÉTAILLÉ DE MODES DE RÉALISATION

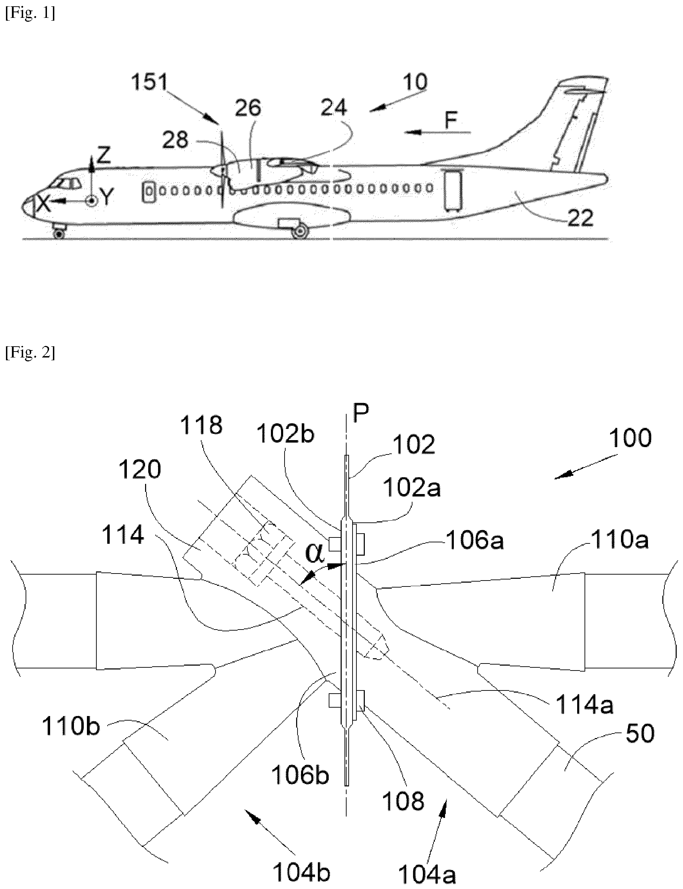

Dans la description qui suit, les termes relatifs à une position sont pris en référence à un aéronef en position d'avancement, c'est-à-dire comme il est représenté sur la Fig. 1, où la flèche F montre la direction d'avancement de l'aéronef.

Dans la description qui suit, et par convention, on appelle X la direction longitudinale qui correspond à l'axe de l'aéronef orienté positivement vers l'avant dans le sens d'avancement de l'aéronef, on appelle Y la direction transversale qui est horizontale lorsque l'aéronef est au sol, et Z la direction verticale ou hauteur verticale lorsque l'aéronef est au sol, ces trois directions X, Y et Z étant orthogonales entre elles.

La Fig. 1 montre un aéronef 10 qui présente un fuselage 22 de part et d'autre duquel est fixée une aile 24. Sous chaque aile 24 est fixé au moins un ensemble propulsif 151 qui comporte une nacelle 26 comprenant des capots 28 formant une surface extérieure aérodynamique.

L'ensemble propulsif 151 comporte également un moteur qui est logé dans la nacelle 26 et qui prend ici la forme d'un moteur à hélice, mais qui peut être d'un autre type.

L'aéronef 10 comporte également un châssis (appelé aussi mât) tel que celui représenté à la Fig. 5. Comme déjà décrit ci-dessus, le châssis 500 comporte des éléments structurels reliés entre eux pour former une cage et le châssis 500 comporte ici une pluralité d'arches 502 disposées les unes à la suite des autres parallèlement à la direction longitudinale X et entre deux arches 502 successives, et des poutres 504 fixées par leurs extrémités aux deux arches 502 successives. Bien sûr, le châssis 500, les arches 502 et les poutres 504 peuvent prendre d'autres formes. Un tel châssis 500 constitue un mât pour l'accrochage de l'ensemble propulsif 151 sous l'aile 24 où l'ensemble propulsif 151 est fixé au châssis 500 et où le châssis 500 est fixé à l'aile 24.

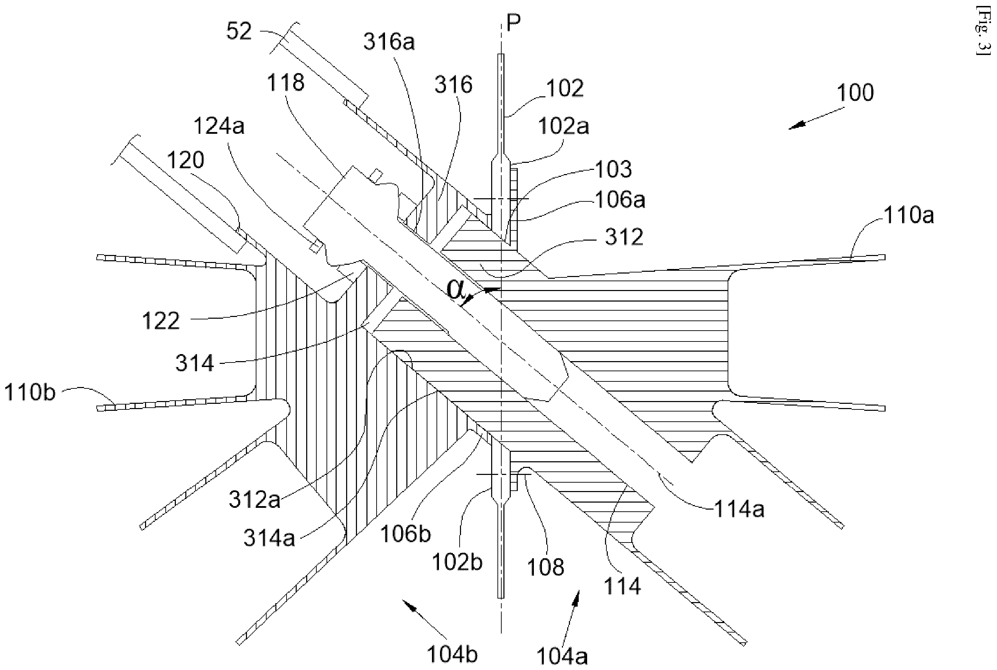

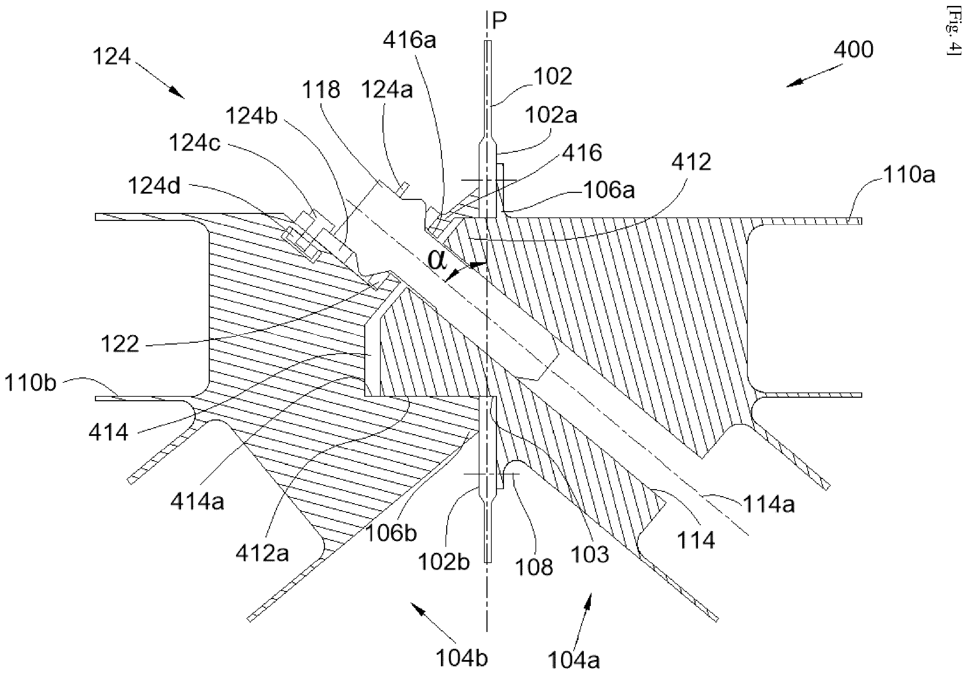

La Fig. 2 montre la jonction entre une plaque support 102 et des poutres 50 dans le cadre d'un ensemble 100 selon un premier mode de réalisation de l'invention. La Fig. 3 montre cet ensemble 100 selon le premier mode de réalisation de l'invention et la Fig. 4 montre un ensemble 400 selon un deuxième mode de réalisation de l'invention.

L'ensemble 100, 400 est plus particulièrement décrit dans le cas d'un châssis pour la fixation d'un moteur d'aéronef, mais il peut être mis en œuvre dans d'autres domaines lorsque ses poutres doivent être fixées à une plaque support par exemple de manière globalement perpendiculaire. Ainsi, la plaque support 102 peut être une arche ou un autre élément plan.

L'ensemble 100, 400 est donc destiné à la fixation des poutres 50 qui sont ici au nombre de quatre mais en fonction de l'encombrement, et en particulier des diamètres des poutres 50, il est possible d'en avoir plus ou moins, c'est-à-dire au moins une.

L'ensemble 100, 400 comporte ainsi la plaque support 102 présentant une ouverture 103 traversante et où la plaque support 102 présente deux faces parallèles entre elles et parallèle à un plan d'appui P, où la plaque support 102 présente une première face 102a et une deuxième face 102b opposée à la première face 102a.

L'ensemble 100, 400 comporte également une première ferrure 104a qui vient contre la première face 102a et une deuxième ferrure 104b qui vient contre la deuxième face 102b.

La première ferrure 104a présente une première base 106a qui vient en appui contre la première face 102a à laquelle elle est fixée directement à l'aide de moyens de fixation 108 comme des boulons qui traversent la plaque support 102 et la première base 106a.

Lorsque la première ferrure 104a est en place contre la première face 102a, la première ferrure 104a présente du côté opposé à la première face 102a, au moins un premier manchon 110a, ici au nombre de deux, et chaque premier manchon 110a reçoit par emmanchement une extrémité d'une poutre 50. Le ou chaque premier manchon 110a est solidaire de la première base 106a. L'emmanchement est préférentiellement réalisé en force et/ou par soudage.

Dans le mode de réalisation de l'invention présenté aux Figs. 2 à 4, l'une des poutres 50 est perpendiculaire à la plaque support 102, c'est-à-dire au plan d'appui P, mais d'autres orientations restent possibles.

La première ferrure 104a présente également un plot 312, 412 qui s'étend à travers l'ouverture 103 de la plaque support 102 pour se retrouver de l'autre côté de la plaque support 102 par rapport à la première base 106a. Le plot 312, 412 est également solidaire de la première base 106a.

Le plot 312, 412 présente un alésage 114 avec un axe 114a. L'alésage 114 est ici traversant mais il pourrait être borgne. L'alésage 114 débouche au moins du côté opposé à la première base 106a, c'est-à-dire du côté de la deuxième ferrure 104b.

La deuxième ferrure 104b présente une deuxième base 106b qui vient en appui contre la deuxième face 102b.

Lorsque la deuxième ferrure 104b est en place contre la deuxième face 102b, la deuxième ferrure 104b présente du côté opposé à la deuxième face 102b, au moins un deuxième manchon 110b, ici également au nombre de deux, et chaque deuxième manchon 110b reçoit par emmanchement une extrémité d'une poutre 50. Le ou chaque deuxième manchon 110b est solidaire de la deuxième base 106b. L'emmanchement est préférentiellement réalisé en force et/ou par soudage.

Comme pour la première ferrure 104a, dans le mode de réalisation de l'invention présenté aux Figs. 2 à 4, l'une des poutres 50 est perpendiculaire à la plaque support 102, c'est-à-dire au plan d'appui P, mais d'autres orientations restent possibles.

La deuxième ferrure 104b présente également un logement 314, 414 qui est donc creusé à l'intérieur de la deuxième ferrure 104b et dans lequel loge le plot 312, 412 de la première ferrure 104a.

Le logement 314, 414 présente une paroi de serrage 316, 416 qui est percée d'un trou 316a, 416a en regard, c'est-à-dire aligné avec l'alésage 114 du plot 312, 412. La paroi de serrage 316, 416 est alors en face de l'alésage 114 du plot 312, 412 et est préférentiellement perpendiculaire à l'axe 114a de l'alésage 114.

L'ensemble 100 comporte également une vis de serrage 118 qui présente une tête et une tige filetée, où la tige filetée est vissée dans l'alésage 114 qui est taraudé à cet effet, en amenant la tête en appui contre la paroi de serrage 316, 416, qui est ainsi prise en sandwich entre la tête de la vis de serrage 118 et le plot 312, 412. La tige filetée de la vis de serrage 118 est ainsi introduite dans le trou 316a, 416a pour se visser dans l'alésage 114 du plot 312, 412.

La deuxième ferrure 104b n'est donc pas fixée directement à la plaque support 102, mais par serrage par l'intermédiaire de la première ferrure 104a.

L'axe 114a de l'alésage 114 présente avec le plan d'appui P, un angle α compris entre 10° et 80°, et préférentiellement entre 30° et 60°.

Un tel arrangement permet de dégager l'espace qui, perpendiculairement, est en face de la plaque support 102, pour y placer des manchons 110a-b qui peuvent ainsi être perpendiculaires à la plaque support 102.

Dans le cas d'un châssis 500 pour un moteur d'aéronef 10 et dans le cas où une poutre 50 de chaque côté de la plaque support 102 est perpendiculaire à la plaque support 102, la traction et le cisaillement qui sont transmis à travers le châssis 500 sont transférés à travers la vis de serrage 118 et l'épaulement de la première ferrure 104a.

Dans les modes de réalisation des Figs. 3 et 4, l'alésage 114 est coaxial avec l'un des manchons 110a de la première ferrure 104a ce qui facilite la réalisation dudit alésage 114.

Dans le premier mode de réalisation de l'invention, la tête de la vis de serrage 118 est logée dans un fût 120 de la deuxième ferrure 104b et qui est ici cylindrique. Même si ce n'est pas le cas dans le deuxième mode de réalisation de l'invention, un tel fût peut également être mis en place. Le fût 120 est ici coaxial avec l'axe 114a de l'alésage 114.

L'une des surfaces cylindriques du fût 120 porte un premier filet pour permettre la mise en place d'une poutre additionnelle 52 par vissage. À cette fin, une extrémité de la poutre additionnelle 52 porte un deuxième filet complémentaire au premier filet pour coopérer ensemble.

Dans le mode de réalisation de l'invention présenté à la Fig. 3, la surface extérieure du fût 120 est filetée et l'intérieur de la poutre additionnelle 52 est taraudé.

Le plot 312, 412 présente une surface extérieure 312a, 412a, préférentiellement cylindrique, qui s'emmanche dans une surface intérieure 314a, 414a du logement 314, 414 pour assurer un guidage en translation des deux ferrures 104a-b l'une par rapport à l'autre.

Dans le premier mode de réalisation de l'invention, le plot 312 présente une surface extérieure 312a et le logement 314 présente une surface intérieure 314a qui sont parallèles à l'axe 114a de l'alésage 114 et qui présentent donc le même angle α avec le plan d'appui P. Préférentiellement, la surface extérieure 312a et la surface intérieure 314a prennent chacune la forme d'une surface cylindrique coaxiale avec l'axe 114a de l'alésage 114.

Dans le deuxième mode de réalisation de l'invention, le plot 412 présente une surface extérieure 412a et le logement 414 présente une surface intérieure 414a qui sont perpendiculaires au plan d'appui P. Dans le cas d'un châssis 500 pour un moteur d'aéronef 10, cela permet de transférer le cisaillement purement dans la plaque support 102. Préférentiellement, la surface extérieure 412a et la surface intérieure 414a prennent chacune la forme d'une surface cylindrique perpendiculaire au plan d'appui P.

Dans les modes de réalisation de l'invention présentés sur les Figs. 3 et 4, le serrage de la vis de serrage 118 contre la paroi de serrage 316, 416 s'effectue par l'intermédiaire d'une rondelle 122.

Dans le deuxième mode de réalisation de l'invention, la tête de la vis de serrage 118 est bloquée en rotation par des moyens de blocage 124. De tels moyens de blocage 124 peuvent également être mis en place dans le premier mode de réalisation de l'invention.

Ici, les moyens de blocage 124 comprennent une couronne hexagonale 124a qui est enfilée autour de la tête hexagonale de la vis de serrage 118, et qui présente une extension 124 qui est percée et reçoit une vis de blocage 124c qui se visse dans un écrou 124d bloqué dans la deuxième ferrure 104b.

Les moyens de blocage 124 peuvent prendre toutes autres formes connues de l'homme du métier.

Dans le cas d'un châssis 500 pour fixer l'ensemble propulsif 151 à l'aile 24, le châssis 500 comporte ainsi une pluralité d'arches 502 et une pluralité de poutres 504, où les poutres 504 sont fixées aux arches 502 à l'aide d'ensembles 100, 400 tels que décrit ci-dessus, où chaque arche 502 constitue une plaque support 102 et où chaque manchon 110a-b reçoit par emmanchement une extrémité d'une poutre 504.

## Revendications

1. Ensemble (100, 400) destiné à la fixation de poutres (50) et comportant :
- une plaque support (102) traversée par une ouverture (103) et présentant une première face (102a) et une deuxième face (102b) opposée à la première face (102a), les deux faces (102a-b) étant parallèles à un plan d'appui (P),
- une première ferrure (104a) présentant :
une première base (106a) fixée contre la première face (102a) par des moyens de fixation (108),
du côté opposé à la première face (102a), au moins un premier manchon (110a) destiné à recevoir par emmanchement une extrémité d'une poutre (50), et
un plot (312, 412) présentant un alésage (114) avec un axe (114a),
- une deuxième ferrure (104b) présentant une deuxième base (106b) en appui contre la deuxième face (102b), et, du côté opposé à la deuxième face (102b), au moins un deuxième manchon (110b) solidaire de la deuxième base (106b) et destiné à recevoir par emmanchement une extrémité d'une poutre (50), et un logement (314, 414) qui présente une paroi de serrage (316, 416) percée d'un trou (316a, 416a) en regard de l'alésage (114), et
- une vis de serrage (118) vissée dans l'alésage (114) en prenant la paroi de serrage (316, 416) en sandwich,
ledit ensemble (100, 400) étant **caractérisé en ce que** le plot (312, 412) s'étend à travers ladite ouverture (103), **en ce que** ledit plot (312, 412) loge dans ledit logement (314, 414) et **en ce que** l'axe (114a) présente avec le plan d'appui (P), un angle (α) compris entre 10° et 80°, et préférentiellement entre 30° et 60°.

2. Ensemble (100, 400) selon la revendication 1, **caractérisé en ce que** l'alésage (114) est coaxial avec l'un des manchons (110a) de la première ferrure (104a).

3. Ensemble (100, 400) selon l'une des revendications 1 ou 2, **caractérisé en ce que** la tête de la vis de serrage (118) est logée dans un fût (120) de la deuxième ferrure (104b) dont l'une des surfaces cylindriques porte un premier filet, et **en ce que** l'ensemble (100, 400) comporte une poutre additionnelle (52) dont une extrémité porte un deuxième filet complémentaire au premier filet.

4. Ensemble (100) selon l'une des revendications 1 à 3, **caractérisé en ce que** le plot (312) présente une surface extérieure (312a) qui s'emmanche dans une surface intérieure (314a) du logement (314), et **en ce que** la surface extérieure (312a) et la surface intérieure (314a) sont parallèles à l'axe (114a) de l'alésage (114).

5. Ensemble (400) selon l'une des revendications 1 à 3, **caractérisé en ce que** le plot (412) présente une surface extérieure (412a) qui s'emmanche dans une surface intérieure (414a) du logement (414), et **en ce que** la surface extérieure (412a) et la surface intérieure (414a) sont perpendiculaires au plan d'appui (P).

6. Châssis (500) pour fixer un ensemble propulsif (151) à une aile (24) d'un aéronef (10), ledit châssis (500) comportant une pluralité d'arches (502) et une pluralité de poutres (504) où les poutres (504) sont fixées aux arches (502) à l'aide d'ensembles (100, 400) selon l'une des revendications précédentes, où chaque arche (502) constitue une plaque support (102) et où chaque manchon (110a-b) reçoit par emmanchement une extrémité d'une poutre (504).

7. Aéronef (10) comportant un châssis (500) selon la revendication précédente, un ensemble propulsif (151) et une aile (24), où l'ensemble propulsif (151) est fixé au châssis (500) et où le châssis (500) est fixé à l'aile (24).

## Patentansprüche

1. Anordnung (100, 400), die zur Befestigung von Balken (50) bestimmt ist und Folgendes umfasst:
- eine Trägerplatte (102), die von einer Öffnung (103) durchquert wird und eine erste Fläche (102a) und eine der ersten Fläche (102a) entgegengesetzte zweite Fläche (102b) aufweist, wobei die zwei Flächen (102a-b) parallel zu einer Anlageebene (P) sind,
- einen ersten Beschlag (104a), der Folgendes aufweist:
eine erste Basis (106a), die durch Befestigungsmittel (108) an der ersten Fläche (102a) befestigt ist,
auf der der ersten Fläche (102a) entgegengesetzten Seite mindestens eine erste Hülse (110a), die dazu bestimmt ist, ein Ende eines Balkens (50) durch Einstecken aufzunehmen, und
einen Zapfen (312, 412), der eine Bohrung (114) mit einer Achse (114a) aufweist,
- einen zweiten Beschlag (104b), der Folgendes aufweist: eine zweite Basis (106b), die an der zweiten Fläche (102b) anliegt, und auf der der zweiten Fläche (102b) entgegengesetzten Seite mindestens eine zweite Hülse (110b), die mit der zweiten Basis (106b) fest verbunden ist und dazu bestimmt ist, ein Ende eines Balkens (50) durch Einstecken aufzunehmen, und eine Aufnahme (314, 414), die eine Spannwand (316, 416) aufweist, die gegenüber der Bohrung (114) von einem Loch (316a, 416a) durchbohrt ist, und
- eine Spannschraube (118), die in die Bohrung (114) geschraubt ist und so die Spannwand (316, 416) sandwichartig einschließt,
wobei die Anordnung (100, 400) **dadurch gekennzeichnet ist, dass** sich der Zapfen (312, 412) durch die Öffnung (103) erstreckt, dass der Zapfen (312, 412) in der Aufnahme (314, 414) aufgenommen ist und dass die Achse (114a) mit der Anlageebene (P) einen Winkel (α) zwischen 10° und 80°, und vorzugsweise zwischen 30° und 60°, aufweist.

2. Anordnung (100, 400) nach Anspruch 1, **dadurch gekennzeichnet, dass** die Bohrung (114) zu einer der Hülsen (110a) des ersten Beschlags (104a) koaxial ist.

3. Anordnung (100, 400) nach einem der Ansprüche 1 oder 2, **dadurch gekennzeichnet, dass** der Kopf der Spannschraube (118) in einem Schaft (120) des zweiten Beschlags (104b) aufgenommen ist, von dem eine der zylindrischen Oberflächen ein erstes Gewinde trägt, und dass die Anordnung (100, 400) einen zusätzlichen Balken (52) umfasst, von dem ein Ende ein zweites Gewinde trägt, das zu dem ersten Gewinde komplementär ist.

4. Anordnung (100) nach einem der Ansprüche 1 bis 3, **dadurch gekennzeichnet, dass** der Zapfen (312) eine Außenoberfläche (312a) aufweist, die in eine Innenoberfläche (314a) der Aufnahme (314) eingesteckt ist, und dass die Außenoberfläche (312a) und die Innenoberfläche (314a) parallel zu der Achse (114a) der Bohrung (114) sind.

5. Anordnung (400) nach einem der Ansprüche 1 bis 3, **dadurch gekennzeichnet, dass** der Zapfen (412) eine Außenoberfläche (412a) aufweist, die in eine Innenoberfläche (414a) der Aufnahme (414) eingesteckt ist, und dass die Außenoberfläche (412a) und die Innenoberfläche (414a) senkrecht zu der Anlageebene (P) sind.

6. Rahmen (500) zur Befestigung einer Antriebseinheit (151) an einer Tragfläche (24) eines Flugzeugs (10), wobei der Rahmen (500) eine Vielzahl von Bögen (502) und eine Vielzahl von Balken (504) umfasst, wobei die Balken (504) mit Hilfe von Anordnungen (100, 400) nach einem der vorhergehenden Ansprüche an den Bögen (502) befestigt sind, wobei jeder Bogen (502) eine Trägerplatte (102) bildet und wobei jede Hülse (100a-b) ein Ende eines Balkens (504) durch Einstecken aufnimmt.

7. Flugzeug (10), das einen Rahmen (500) nach dem vorhergehenden Anspruch, eine Antriebseinheit (151) und eine Tragfläche (24) umfasst, wobei die Antriebseinheit (151) an dem Rahmen (500) befestigt ist und wobei der Rahmen (500) an der Tragfläche (24) befestigt ist.

## Claims

1. Assembly (100, 400) intended to fix beams (50) and including:
- a support plate (102) through which an opening (103) passes and having a first face (102a) and a second face (102b) opposite the first face (102a), the two faces (102a-b) being parallel to a bearing plane (P),
- a first hardware (104a) including:
a first base (106a) fixed against the first face (102a) by fixing means (108),
on the side opposite the first face (102a), at least one first sleeve (110a) intended to receive inside it one end of a beam (50), and
a stud (312, 412) including a hole (114) with an axis (114a),
- a second hardware (104b) including a second base (106b) bearing against the second face (102b) and, on the side opposite the second face (102b), at least one second sleeve (110b) fastened to the second base (106b) and intended to receive inside it one end of a beam (50), and a housing (314, 414) which includes a clamping wall (316, 416) through which passes a hole (316a, 416a) facing said hole (114), and
- a clamping screw (118) screwed into the hole (114) and sandwiching the clamping wall (316, 416),
said assembly (100, 400) being characterized int that the stud (312, 412) extends through said opening (103), in that said stud (312, 412) is housed in said housing (314, 414) and in that the axis (114a) presents with the bearing plane (P), an angle (α) between 10° and 80° and preferably between 30° and 60°.

2. Assembly (100, 400) according to claim 1 **characterised in that** the hole (114) is coaxial with one of the sleeves (110a) of the first hardware (104a).

3. Assembly (100, 400) according to either one of claims 1 or 2 **characterised in that** the head of the clamping screw (118) is housed in a barrel (120) of the second hardware (104b) one of the cylindrical surfaces of which carries a first thread and **in that** the assembly (100, 400) includes an additional beam (52) one end of which carries a second thread complementary to the first thread.

4. Assembly (100) according to any one of claims 1 to 3 **characterised in that** the stud (312) has an exterior surface (312a) that fits inside an interior surface (314a) of the housing (314) and **in that** the exterior surface (312a) and the interior surface (314a) are parallel to the axis (114a) of the hole (114).

5. Assembly (400) according to any one of claims 1 to 3 **characterised in that** the stud (412) has an exterior surface (412a) that fits inside an interior surface (414a) of the housing (414) and **in that** the exterior surface (412a) and the interior surface (414a) are both perpendicular to the bearing plane (P).

6. Chassis (500) for fixing a propulsion assembly (151) to a wing (24) of an aircraft (100), said chassis (500) including a plurality of arches (502) and a plurality of beams (504) where the beams (504) are fixed to the arches (502) by means of assemblies (100, 400) according to any one of the preceding claims, where each arch (502) constitutes a support plate (102) and each sleeve (110a-b) receives inside it one end of a beam (504).

7. Aircraft (100) including a chassis (500) according to the preceding claim, a propulsion assembly (151) and a wing (24), with the propulsion assembly (151) fixed to the chassis (500) and the chassis (500) fixed to the wing (24).
